Europäisches Patentamt

European Patent Office

Office européen des brevets

(19)

(11)  **EP 1 124 896 B1**

(12)  **EUROPÄISCHE PATENTSCHRIFT**

(45) Veröffentlichungstag und Bekanntmachung des Hinweises auf die Patenterteilung:
**02.04.2003  Patentblatt 2003/14**

(51) Int Cl.⁷: **C08L 5/00**, C08L 3/12, C08J 3/14

(21) Anmeldenummer: **99944385.6**

(22) Anmeldetag: **13.08.1999**

(86) Internationale Anmeldenummer:
**PCT/EP99/05929**

(87) Internationale Veröffentlichungsnummer:
**WO 00/012617 (09.03.2000 Gazette 2000/10)**

(54) **VERFAHREN ZUR HERSTELLUNG VON SPHÄRISCHEN MIKROPARTIKELN MIT GLATTER OBERFLÄCHE, DIE GANZ ODER TEILWEISE AUS MINDESTENS EINEM WASSERUNLÖSLICHEN LINEAREN POLYSACCHARID BESTEHEN**

METHOD FOR PREPARING SMOOTH-SURFACE SPHERICAL MICROPARTICLES COMPLETELY OR PARTIALLY MADE OF AT LEAST ONE WATER-INSOLUBLE LINEAR POLYSACCHARIDE

PROCEDE DE PREPARATION DE MICROPARTICULES SPHERIQUES A SURFACE LISSE, CONSISTANT EN TOTALITE OU EN PARTIE EN AU MOINS UN POLYSACCHARIDE LINEAIRE NON SOLUBLE DANS L'EAU

(84) Benannte Vertragsstaaten:
**BE DE ES FR GB IT NL**

(30) Priorität: **28.08.1998  DE 19839214**

(43) Veröffentlichungstag der Anmeldung:
**22.08.2001  Patentblatt 2001/34**

(73) Patentinhaber: **Celanese Ventures GmbH
65926 Frankfurt am Main (DE)**

(72) Erfinder:

• **BENGS, Holger
  D-60598 Frankfurt am Main (DE)**
• **GRANDE, Jürgen
  D-65812 Bad Soden (DE)**
• **SCHUTH, Silke
  D-56412 Ruppach-Goldhausen (DE)**
• **BÖHM, Gitte
  D-60439 Frankfurt am Main (DE)**
• **SCHNELLER, Arnold
  D-64409 Messel (DE)**
• **BRUNNER, Anette
  D-91154 Roth (DE)**

(74) Vertreter: **Luderschmidt, Schüler & Partner
Patentanwälte
Industriepark Höchst
65926 Frankfurt (DE)**

(56) Entgegenhaltungen:
**EP-A- 0 328 317          EP-A- 0 394 731
US-A- 5 624 612          US-A- 5 637 197**

**Beschreibung**

Die vorliegende Erfindung betrifft ein Verfahren zur Herstellung von sphärischen Mikropartikeln mit glatter Oberfläche, die ganz oder teilweise aus mindestens einem wasserunlöslichen linearen Polysaccharid bestehen, sowie mit diesem Verfahren erhältliche Mikropartikel.

Verfahren zur Herstellung von sphärischen Mikropartikeln, die wasserunlösliche lineare Polysaccharide enthalten, sind in der deutschen Patentanmeldung Nr. 19737481.6 der Anmelderin beschrieben. Mit diesem Verfahren können auf einfache und kostengünstige Weise sphärische Mikroparlikel erhalten werden, die sich insbesondere durch eine hohe Einheitlichkeit in Bezug auf ihre Gestalt und Verteilung des Durchmessers sowie gute mechanische Eigenschaften auszeichnen.

Aufgrund ihrer vergleichsweise regelmäßigen Beschaffenheit bei gleichzeitig guten mechanischen Eigenschaften können diese Mikropartikel für eine Vielzahl von Anwendungen eingesetzt werden.

Es hat sich jedoch gezeigt, daß je nach Anwendungszweck eine gezielte Modifizierung der Partikelbeschaffenheit vorteilhaft sein kann.

So kann es wünschenswert sein, derartige Mikropartikel mit besonders glatter Oberfläche herzustellen. Mikropartikel mit glatter Oberfläche eignen sich beispielsweise insbesondere zur Anwendung in Trennverfahren, z.B. für die Chromatographie, für die eine vergleichsweise hohe Schüttdichte vorteilhaft ist oder wenn ein besonderer Glättungseffekt erzielt werden soll, z.B. für kosmetische Zwecke.

Es ist daher Aufgabe der vorliegenden Erfindung, ein Verfahren zur Verfügung zu stellen, mit dem auf einfache Weise reproduzierbar wasserunlösliche lineare Polysaccharide enthaltende sphärische Mikropartikel erhalten werden können, die neben einer regelmäßigen Gestalt, einheitlichen Verteilung des Durchmessers sowie guten mechanischen Eigenschaften eine glatte Oberfläche aufweisen.

In diesem Sinne versteht sich die vorliegende Erfindung als vorteilhafte erfinderische Weiterbildung der vorstehend genannten deutschen Patentanmeldung Nr. 19737481.6.

Gelöst wird diese Aufgabe durch ein Verfahren zur Herstellung von sphärischen Mikropartikeln mit glatter Oberfläche, die ganz oder teilweise aus mindestens einem wasserunlöslichen linearen Polysaccharid bestehen, durch Lösen des mindestens einen wasserunlöslichen linearen Polysaccharids in einem Lösungsmittel oder Lösungsmittelgemisch, Einbringen der gebildeten Lösung in ein Fällmittel oder Fällmittelgemisch, gegebenfalls Kühlen des dabei entstehenden Gemisches und Abtrennen der gebildeten Mikropartikel, wobei als Fällungshilfsmittel mindestens ein wasserlösliches Cellulosederivat eingesetzt wird.

Weiter betrifft die vorliegende Erfindung sphärische Mikropartikel mit glatter Oberfäche, bestehend ganz oder teilweise aus mindestens einem wasserunlöslichen linearen Polysaccharid, dadurch gekennzeichnet, daß die Tiefe von Unregelmäßigkeiten auf der Oberfläche der Mikropartikel maximal 10 % des mittleren Durchmessers der Mikropartikel beträgt.

Die Abbildungen 1 bis 6 zeigen rasterelektronenmikroskpische Aufnahmen (REM, Camscan S-4) von Mikropartikeln:

　　　Abbildung 1: erfindungsgemäße Partikel gemäß Beispiel 2 in 5000 x Vergrößerung,
　　　Abbildung 2: Partikel nach Abbildung 1 in 10000 x Vergrößerung,
　　　Abbildung 3: erfindungsgemäße Partikel nach Beispiel 4 in 5000 x Vergrößerung,
　　　Abbildung 4: erfindungsgemäße Partikel nach Abbildung 3 in 20000 x Vergrößerung,
　　　Abbildung 5: erfindungsgemäße Partikel nach Beispiel 5 in 5000 x Vergrößerung,
　　　und Abbildung 6: Partikel nach Abbildung 5 in 20000 x Vergrößerung.

Für die Zwecke der vorliegende Erfindung wird sich auf den Inhalt der deutschen Patentanmeldung Nr. 19737481.6 ausdrücklich bezogen.

Obwohl in dieser Anmeldung auch der Einsatz von Fällungshilfsmitteln diskutiert wird, findet sich kein Hinweis auf die Verwendung von wasserlöslichen Cellulosederivaten, insbesondere findet sich kein Hinweis, derartige Verbindungen einzusetzen, um gezielt die Oberflächenbeschaffenheit der Mikropartikel zu steuern.

Für das erfindungsgemäße Verfahren kann prinzipiell jedes wasserlösliche Cellulosederivat verwendet werden, sofern es als Fällungshilfsmittel geeignet ist. Es kann sich hierbei um chemisch modifizierte Cellulosen jedweder Art handeln. Insbesondere werden hierunter durch polymeranaloge Reaktionen chemisch modifizierte Cellulosen verstanden wie sie z.B. in "Römpp Chemie Lexikon, 9. Auflage, Georg Thieme Verlag, Stuttgart, New York, 1995 beschrieben sind.

Beispiele sind Celluloseester und Celluloseether und deren Mischformen, Konkrete Vertreter sind z.B. Hydroxypropylmethylcellulosen, Hydroxyethylcellulosen, Carboxymethylcellulosen, Celluloseacetate, Cellulosebutyrate, Cellulosepropionate, Celluloseacetobutyrate, Celluloseacetopropionate, Cellulosenitrate, Ethylcellulosen, Benzylcellulosen und Methylcellulosen.

Es können auch Mischungen von verschiedenen wasserlöslichen Cellulosederivaten eingesetzt werden.

Unter dem Begriff "wasserlösliche Cellulosederivate" werden für die vorliegende Erfindung Verbindungen verstanden, die nach der Definition des Deutschen Arzneibuches (DAB = Deutsches Arzneibuch, Wissenschaftliche Verlagsgesellschaft mbH, Stuttgart, Govi-Verlag GmbH, Frankfurt, 9. Auflage, 1987) unter die Kategorie sehr leicht löslich bis schwer löslich fallen.

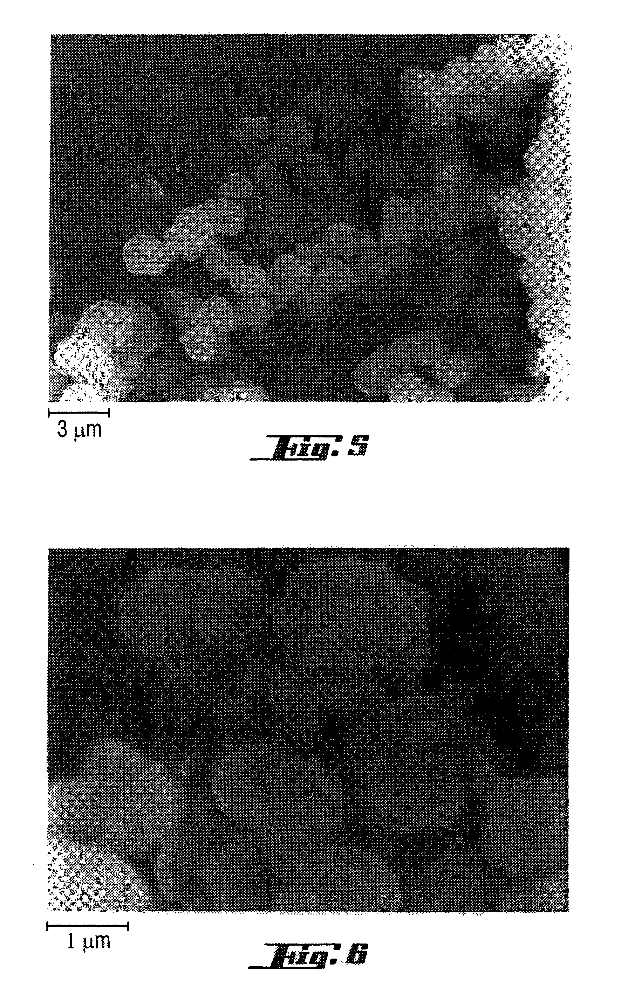

Abbildung 5: erfindungsgemäße Partikel nach Beispiel 5 in 5000 x Vergrößerung, und Abbildung 6: Partikel nach Abbildung 5 in 20000 x Vergrößerung.

Für die Zwecke der vorliegende Erfindung wird sich auf den Inhalt der deutschen Patentanmeldung Nr. 19737481.6 ausdrücklich bezogen.

Obwohl in dieser Anmeldung auch der Einsatz von Fällungshilfsmitteln diskutiert wird, findet sich kein Hinweis auf die Verwendung von wasserlöslichen Cellulosederivaten, insbesondere findet sich kein Hinweis, derartige Verbindungen einzusetzen, um gezielt die Oberflächenbeschaffenheit der Mikropartikel zu steuern.

In US-A-5 624 612 wird zwar der Einsatz von wasserlöslichen Cellulosederivaten zur Modifikation von aus Polysacchariden bestehenden Mikropartikeln beschrieben, allerdings werden die Gellulosederivate hier nicht als Fällunsghilfsmittel eingesetzt, sondern dienen der Beschichtung von Mikropartikeln, um deren Rehydrierbarkeit zu erhöhen, wobei die beschriebenen Mikropartikel auch nicht aus erfindungsgemäß verwendeten wasserunlöslichen linearen Polysacchariden bestehen.

Für das erfindungsgemäße Verfahren kann prinzipiell jedes wasserlösliche Cellulosederivat verwendet werden, sofern es als Fällungshilfsmittel geeignet ist. Es kann sich hierbei um chemisch modifizierte Cellulosen jedweder Art handeln. Insbesondere werden hierunter durch polymeranaloge Reaktionen chemisch modifizierte Cellulosen verstanden wie sie z.B. in "Römpp Chemie Lexikon, 9. Auflage, Georg Thieme Verlag, Stuttgart, New York, 1995 beschrieben sind.

Beispiele sind Celluloseester und Celluloseether und deren Mischformen, Konkrete Vertreter sind z.B. Hydroxypropylmethylcellulosen, Hydroxyethylcellulosen, Carboxymethylcellulosen, Celluloseacetate, Cellulosebutyrate, Cellulosepropionate, Celluloseacetobutyrate, Celluloseacetopropionate, Cellulosenitrate, Ethylcellulosen, Benzylcellulosen und Methylcellulosen.

Es können auch Mischungen von verschiedenen wasserlöslichen Cellulosederivaten eingesetzt werden.

Die Konzentration des wasserlöslichen Cellulosederivats in dem Fällmittel ist nicht weiter kritisch. Die Obergrenze ergibt sich zwangsläufig aus der resultierenden Viskosität und damit der Verarbeitbarkeit der entstehenden Lösung.

Als vorteilhaft haben sich Konzentrationen von 2 g (Cellulosederivat)/l (Fällmittel) bis 150 g/l, vorzugsweise von 5 g/l bis 80 g/l und insbesondere 8 g/l bis 20 g/l, erwiesen.

Lineare wasserunlösliche Polysaccharide im Sinne der vorliegenden Erfindung sind Polysaccharide, die aus Monosacchariden, Disacchariden oder anderen monomeren Bausteinen derart aufgebaut sind, daß die einzelnen Bausteine stets in der gleichen Art miteinander verknüpft sind. Jede so definierte Grundeinheit oder Baustein hat genau zwei Verknüpfungen, jeweils eine zu einem anderen Monomer. Davon ausgenommen sind lediglich die beiden Grundeinheiten, die den Anfang bzw. das Ende des Polysaccharids bilden. Diese haben nur eine Verknüpfung zu einem weiteren Monomer.

Beispiele für bevorzugte wasserunlösliche lineare Polysaccharide sind lineare Poly-D-glucane, wobei die Art der Verknüpfung unwesentlich ist, solange Linearität im Sinne der Erfindung vorliegt. Beispiele sind Poly(1,4-alpha-D-Glucan) und Poly(1,3-beta-D-Glucan), wobei Poly(1,4-alpha-D-Glucan) besonders bevorzugt ist.

Besitzt die Grundeinheit drei oder mehr Verknüpfungen, wird von Verzweigung gesprochen. Dabei ergibt sich aus der Anzahl der Hydroxylgruppen pro 100 Grundeinheit, die nicht am Aufbau des linearen Polymerrückgrats beteiligt sind und die Verzweigungen ausbilden, der sogenannte Verzweigungsgrad.

Erfindungsgemäß weisen die linearen wasserunlöslichen Polysaccharide einen Verzweigungsgrad von weniger als 8 % auf, d.h. sie haben weniger als 8 Verzweigungen auf 100 Grundeinheiten. Vorzugsweise ist der Verzweigungsgrad kleiner 4 % und insbesondere maximal 1,5 %.

Ist das wasserunlösliche lineare Polysaccharid ein Polyglucan, z.B. Poly-(1,4-alpha-D-Glucan), ist der Verzweigungsgrad in 6-Position kleiner 4 %, vorzugsweise maximal 2 % und insbesondere maximal 0,5 % und der Verzweigungsgrad in den anderen nicht an der linearen Verknüpfung beteiligten Positionen, z.B. der 2- bzw. 3-Position im Fall des bevorzugten Poly-(1,4-alpha-D-Glucans), ist vorzugsweise jeweils maximal 2 % und insbesondere maximal 1 %.

Besonders bevorzugt sind Polysaccharide, insbesondere Poly-aipha-D-Glucane, die keine Verzweigungen ausweisen, bzw. deren Verzweigungsgrad so minimal ist, daß er mit herkömmlichen Methoden nicht mehr nachweisbar ist.

Erfindungsgemäß beziehen die Präfixe "alpha", "beta" oder "D" allein auf die Verknüpfungen, die das Polymerrückgrat ausbilden und nicht auf die Verzweigungen.

Unter dem Begriff "wasserunlösliche Polysaccharide" werden für die vorliegende Erfindung Verbindungen verstanden, die nach der Definition des Deutschen Arzneibuches entsprechend den Klassen 4 bis 7 unter die Kategorien "wenig löslich", "schwer lösliche", "sehr schwer lösliche" bzw. "praktisch unlösliche" Verbindungen fallen.

Für die vorliegende Erfindung sind schwer lösliche bis praktisch unlösliche Verbindungen, insbesondere sehr schwer lösliche bis praktisch unlösliche Verbindungen, bevorzugt.

Im Fall der erfindungsgemäß verwendeten Polysaccharide bedeutet dies, daß vorzugsweise mindestens 98 % der eingesetzten Menge, insbesondere mindestens 99,5 %, unter Normalbedingungen in Wasser unlöslich ist (entsprechend den Klassen 4 bzw. 5).

"Sehr schwer löslich" entsprechend Klasse 6 kann durch folgende Versuchsbeschreibung veranschaulicht werden:

Ein Gramm des zu untersuchenden Polyglucans/saccharids werden in 1 l entionisierten Wasser auf 130 °C unter einem Druck von 1 bar erhitzt. Die entstehende Lösung bleibt nur kurzzeitig über wenige Minuten stabil. Beim Erkalten unter Normalbedingungen fällt die Substanz wieder aus. Nach Abkühlung auf Raumtemperatur und Abtrennung mittels Zentrifugieren können unter Berücksichtigung der experimentellen Verluste mindestens 66 % der eingesetzten Menge zurückgewonnen werden.

Die erfindungsgemäß eingesetzten Polysaccharide können beliebigen Ursprungs sein, solange die vorstehend angegebenen Bedingungen in Bezug auf die Begriffe "linear" und "wasserunlöslich" erfüllt sind.

Sie können natürlich oder auf biotechnischen Wege gewonnen sein.

Beispielsweise können sie aus natürlichen pflanzlichen oder tierischen Quellen durch Isolierung und Aufreinigung erhalten werden.

Es können auch Quellen zum Einsatz kommen, die gentechnisch derart manipuliert worden sind, daß sie im Vergleich zu der unmanipulierten Quelle einen höheren Anteil an nicht oder vergleichsweise geringfügig verzweigten Polysacchariden enthalten.

Sie können durch enzymatische oder chemische Entzweigung aus nicht-linearen Polysacchariden hergestellt worden sein.

Biotechnische Methoden umfassen biokatalytische, auch biotransformatorische, oder fermentative Prozesse.

Ein vorteilhaftes Verfahren für die biotechnische Gewinnung ist z.B. in der WO 95/31553 beschrieben.

Es können auch modifizierte wasserunlösliche lineare Polysaccharide eingesetzt werden, wobei die Polysaccharide beispielsweise durch Veresterung und/oder Veretherung in einer oder mehreren nicht an der linearen Verknüpfung beteiligten Positionen chemisch modifiziert worden sein können. Im Fall der bevorzugten 1,4 verknüpften Polyglucane kann die Modifizierung in 2-, 3- und/oder 6-Position erfolgen.

Maßnahmen für derartige Modifizierungen sind dem Fachmann hinlänglich bekannt.

So können lineare Polysaccharide wie Pullulane, Pektine, Mannane oder Polyfructane, die an sich wasserlöslich oder quellbar sind, durch Modifizierung wasserunlöslich gemacht werden.

Weiter können sogenannte alpha-amylaseresistente Polysaccharide eingesetzt werden wie sie z.B. in der deutschen Patentanmeldung Nr. 198 30 618.0 beschrieben sind.

Weitere Beispiele für geeignete wasserunlösliche lineare Polysaccharide sowie eine ausführliche Erläuterung in Bezug auf deren Herstellverfahren finden sich in den prioritätsälteren nicht-vorveröffentlichten deutschen Anmeldungen derselben Anmelderin mit Nrn. 197 37 481.6, 198 03 415.6, 198 16 070.4, 198 30 618.0 und 198 27 978.7 auf die hier ausdrücklich verwiesen wird.

Die Molekulargewichte $M_w$ (Gewichtsmittel, bestimmt mittels Gelpermeationschromatographie im Vergleich zu einer Eichung mit Pullulanstandard) der erfindungsgemäß verwendeten linearen Polysaccharide können in einem weiten Bereich von $10^3$ g/mol bis $10^7$ g/mol variieren. Bevorzugt liegt das Molekulargewicht $M_w$ in einem Bereich von $10^4$ g/mol bis $10^5$ g/mol und besonders bevorzugt von $2 \times 10^4$ g/mol bis $5 \times 10^4$ g/mol. Ein weiterer vorteilhafter Bereich ist von $2 \times 10^3$ g/mol bis $8 \times 10^3$ g/mol. Entsprechende Bereiche gelten für das bevorzugt eingesetzte Poly-D-glucan und Poly(1,4-alpha-glucan).

Die Molekulargewichtsverteilung bzw. Polydispersität $M_w/M_n$ kann ebenfalls in weiten Bereichen je nach Herstellungsverfahren des Polysaccharids variieren. Bevorzugte Werte sind von 1,01 bis 50, insbesondere von 1,5 bis 15. Dabei nimmt die Polydispersität mit einer bimodalen Verteilung der Molekulargewichte zu.

Für das erfindungsgemäße Verfahren kann eine einzige lineare Polysaccharidsubstanz, insbesondere lineares Poly-D-glucan, vorzugsweise Poly(1,4-alpha-glucan), oder Mischungen aus zwei oder mehreren Vertretern verwendet werden.

Gemäß einer weiteren Ausführungsform kann ein wasserunlösliches verzweigtes Polysaccharid, vorzugsweise ein Polyglucan, insbesondere ein Poly(1,4-alpha-Dglucan) oder ein Poly(1,3-beta-D-glucan), zugesetzt werden.

Dabei ist der Verzweigungsgrad unerheblich. Der Anteil an verzweigtem Polysaccharid sollte jedoch 30 Gew.-%, bevorzugt 20 Gew.-% und insbesondere 10 Gew,-%, bezogen auf die Gesamtmenge an wasserunlöslichem Polysaccharid, nicht überstelgen.

Es können auch Gemische aus zwei oder mehr verzweigten Polysacchariden zugegeben werden.

Die verzweigten Polysaccharide können beliebigen Ursprungs sein. In diesem Zusammenhang wird auf die diesbezüglichen Erläuterungen für die linearen Polysaccharide verwiesen. Bevorzugte Quellen sind Stärke und Stärkeanaloga wie Glykogen. Falls erforderlich können in den verzweigten Polysacchariden der Anteil an linearen Strukturen durch geeignete Anreicherungsverfahren erhöht werden.

Für die Wasserunlöslichkeit und im wesentlichen auch für das Molekulargewicht gelten die gleichen Angaben wie für das lineare Polysaccharid, wobei jedoch das Molekulargewicht der verzweigten Polysaccharide höher als für die wasserunlöslichen linearen Polysaccharide angegeben, sein kann.

Es können auch andere Polymere, insbesondere andere biokompatible oder bioabbaubare Polymere, beigemischt werden. Dabei hängt die Menge des oder der anderen Polymeren, die beigemengt werden, ohne daß die sphärische Gestalt und/oder sonstige Eigenschaften der herzustellenden Mikropartikel verändert werden, stets von dem zugesetzten Polymer ab. Sie kann bis zu 10 Gew.-% oder mehr, bezogen auf die Gesamtmenge des eingesetzten wasserunlöslichen linearen Polysacchards und ggf. verzweigten Polysacchards, betragen, in bestimmten Fällen auch weniger. Die zulässige maximale Menge hängt von dem jeweiligen Einzelfall ab und kann von einem Fachmann leicht durch Routineversuche bestimmt werden.

Beispiele für geeignete Lösungsmittel für die Auflösung der Ausgangssubstanzen wie der linearen Polysaccharide sind Dimethylsulfoxid (DMSO), Formamid, Acetamid, N,N-Dimethylformamid, N,N-Dimethylacetamid, N-Methylmorpholin-N-oxid in Gegenwart von Wasser, weitere N-substituierte Morpholin-N-oxide, wäßrige Lösungen mit hohem oder niedrigem pH-Wert, oder Mischungen der vorstehend genannten Lösungsmittel, wobei DMSO besonders bevorzugt ist. Selbstverständlich können auch andere, dem Fachmann für diesen Zweck geläufige Lösungsmittel verwendet werden.

Die Konzentration an linearem Polysaccharid in dem Lösungsmittel kann je nach Bedarf in weiten Grenzen variieren. Vorzugsweise liegt sie in einem Bereich von 0,02 g (Polysaccharid)/ml (Lösungsmittel) bis 1,0 g/ml, insbesondere von 0,05 g/ml bis 0,8 g/ml und besonders bevorzugt von 0,3 g/l bis 0,6 g/l.

Beispiele für Fällmittel sind Wasser, Dichlormethan, ein Gemisch aus Wasser und Dichlormethan, Gemische aus Wasser und Alkoholen wie Methanol, Ethanol, Isopropanol, wobei Wasser sowie ein Gemisch aus Wasser und Dichlomethan besonders bevorzugt sind.

Vorzugsweise wird das Verhältnis Lösungsmittel zu Fällmittel in einem Bereich von 1 : 1000 bis 1 : 4 (Teil Lösungsmittel / Teile Fällmittel), vorzugsweise 1 : 100 bis 1 : 10 und insbesondere 1 : 70 bis 1 : 30 ausgewählt.

Gemäß einer bevorzugten Ausführungsform werden die das Polysaccharid enthaltene Lösung und das das wasserlösliche Cellulosederivat enthaltende Fällmittel bei einer Temperatur zwischen 20 °C und 50 °C zusammengebracht.

Erfolgt das Zusammenmischen bei erhöhter Temperatur, kann das entstehende Gemisch anschließend bei Bedarf gekühlt werden.

Dabei ist es unerheblich, in welcher Reihenfolge das Lösungsmittel und das Fällmittel zusammengebracht werden, z.B. ob das Fällmittel zum Lösungsmittel oder umgekehrt gegeben wird.

Wichtig ist jedoch, daß eine schnelle Durchmischung gewährleistet wird.

Die Temperatur während des Fällprozesses wird im allgemeinen bei einem Wert von plus 10 °C bis minus 10 °C, vorzugsweise plus 5 °C und minus 5 °C, gehalten. Bei Bedarf kann sie auch höher oder niedriger gewählt werden.

Der Fällprozeß kann relativ langsam bei tiefer Temperatur über Nacht durchgeführt werden. Er kann durch Variation der Temperatur und des Fällmittels beeinflußt und gesteuert werden. Falls gekühlt wird, muß sichergestellt sein, daß das Gemisch aus Lösungsmittel und Fällmittel liquide bleibt und nicht erstarrt.

Weiter können die Prozeßführung sowie die Eigenschaften der Mikropartikel, wie z. B. die Größe, durch Zusatz weiterer Hilfsmittel neben den erfindungswesentlichen wasserlöslichen Cellulosederivaten beeinflußt werden.

Geeignete Zusatzstoffe sind z.B. oberflächenaktive Stoffe wie Natriumdodecylsulfat, N-Methylgluconamid, Polysorbate (z.B. Tween (eingetragene Marke)), Alkylpolyglycolether, Ethylenoxid-Propylenoxid-Blockpolymere (z.B. Pluronic (eingetragene Marke)), Alkylpolyglycolethersulfate, generell Alkylsulfate und Fettsäureglycolester, und Zucker wie z.B. Fructose, Saccharose und Glucose.

Die oberflächenaktiven Stoffe können anionischer, kationischer oder nicht-ionischer Natur sein.

Üblicherweise werden die Hilfsmittel einschließlich des wasserlöslichen Cellulosederivats dem Fällmittel zugesetzt. Die verwendete Menge hängt von dem jeweiligen Einzelfall sowie den erwünschten Partikeleigenschaften ab, wobei die Bestimmung der jeweils vorteilhaften Menge dem Fachmann geläufig ist.

Interessanterweise hat sich gezeigt, daß der Anteil an besonders kleinen Partikeln gesteigert werden kann, wenn dem Fällmittel heißwasserlösliches Poly-alpha-D-glucan zugesetzt wird.

Es können hierfür dieselben Poly-alpha-D-glucanverbindungen eingesetzt werden wie sie auch im Zusammenhang mit den linearen Polysacchariden genannt worden sind, soweit diese das Merkmal heißwasserlöslich erfüllen.

Bevorzugte Beispiele sind native oder chemisch modifizierte Stärken, aus diesen Stärken gewonnene Poly-alpha-D-glucane sowie stärkeanaloge Verbindungen.

Unter stärkeanaloge Verbindungen werden Verbindungen verstanden, die aus Polyalpha-D-glucanen bestehen, aber nicht-pflanzlichen Ursprungs sind. Ein Beispiel hierfür ist Glykogen oder Dextran.

Die heißwasserlöslichen Poly-alpha-D-glucane können als Mischung aus einem linearen und einem verzweigten Anteil eingesetzt werden, wie sie z.B. in Stärke vorliegt. In diesem Fall sollte der Anteil an linearem Poly-alpha-D-glucan mehr als 15 Gew.-%, vorzugsweise 50 bis 99,5 Gew.-%, insbesondere 60 bis 90 Gew.-% und ganz besonders bevorzugt 65 bis 80 Gew.-%, bezogen auf die Gesamtmenge Poly-alpha-D-glucan im Fällmittel, betragen.

Sie können aber auch aus verzweigten Strukturen bestehen, wie sie z.B. im Amylopektin oder im Glykogen vorliegen.

Im Rahmen der vorliegenden Erfindung bedeutet "heißwasserlöslich", daß die Poly-alpha-D-glucane bei Raumtemperatur im wesentlich unlöslich sind, wobei vorzugsweise der gleiche Maßstab wie für den Begriff "wasserunlöslich" in Zusammenhang mit linearen Polysacchariden gilt. Unter dem Begriff "Lösung" bzw. "Löslichkeit" werden insbesondere auch Suspensionen bzw. die Ausbildung von Suspensionen verstanden wie sie bei der Lösung von Stärke auftreten.

Beispielsweise zeigen die erfindungsgemäß bevorzugten heißwasserlöslichen Stärken bei Raumtemperatur so gut wie keine Löslichkeit in Wasser, während die sogenannten kaltwasserlöslichen Stärken unter diesen Bedingungen leichter löslich sind.

Die heißwasserlöslichen Stärken sind insbesondere dadurch charakterisiert, daß sie bei Erhitzen unter Eigendruck, z.B. in einem Autoklaven, auf eine Temperatur im Bereich von etwa 100 bis etwa 160 °C Lösungen bilden, wobei die jeweilige Temperatur von der Art der Stärke abhängt.

Beispielsweise kann Kartoffelstärke bei ca. 100 °C bis zur völligen Auflösung gekocht werden, während Maisstärke eine Temperatur von ca. 125 °C erfordert.

Für das erfindungsgemäße Verfahren werden die heißwasserlöslichen Poly-alpha-D-glucane dem Fällmittel vorzugsweise in maximaler Konzentration zugesetzt, d.h. es wird eine gesättigte Lösung hergestellt.

Weitere geeignete Bereiche sind von mehr als 0,001 Gew.-% bis 10 Gew.-%, bevorzugt von 0,01 bis 2 Gew.-% und insbesondere von 0,05 Gew.-% bis 0,5 Gew.-%, bezogen auf die eingesetzte Menge an Fällmittel.

Die nach dem erfindungsgemäßen Verfahren erhältlichen sphärischen Mikropartikel, die ebenfalls Gegenstand dieser Erfindung sind, weisen neben den bereits in der deutschen Patentanmeldung Nr. 19737481.6 beschriebenen Vorteilen wie regelmäßiger sphärischer Gestalt, enger Größenverteilung und guten mechanischen Eigenschaften zusätzlich eine besonders glatte Oberfläche auf.

Eine glatte Oberfläche im Sinne der Erfindung bedeutet, daß die Tiefe von Unregelmäßigkeiten auf der Partikeloberfläche, wie Eindellungen oder Einschnitte, maximal 10 %, vorzugsweise 5 %, des mittleren Durchmessers der sphärischen Mikropartikel beträgt.

Die Partikel können mittlere Durchmesser dn (Zahlenmittelwert) von 100 nm bis 10 μm, bevorzugt 800 nm bis 8 μm und besonders bevorzugt 1 μm bis 4 μm, aufweisen.

Sphärisch im Sinne der Erfindung bedeutet, daß die Mikropartikel annähernd Kugelform besitzen. Bei Beschreibung einer Kugel durch von einem gemeinsamen Ursprung ausgehende, in den Raum gerichtete Achsen gleicher Länge, die den Radius der Kugel in allen Raumrichtungen definieren, ist für die sphärischen Mikropartikel eine Abweichung der Achsenlängen vom Idealzustand der Kugel von 1 % bis 40 % möglich. Bevorzugt werden sphärische Mikropartikel mit Abweichungen bis 25 %, besonders bevorzugt bis 15 % erhalten.

Weiter zeigen die erfindungsgemäßen Mikropartikel vorzugsweise eine Dispersität D = Gewichtsmittelwert des Durchmessers ($d_w$) / Zahlenmittelwert des Durchmessers ($d_n$) von 1,0 bis 50,0, vorzugsweise von 1,5 bis 20,0 und insbesondere von 2,0 bis 10,0.

Die hier benutzten Mittelwerte sind wie folgt definiert:

$$d_n = \text{Summe } n_i \times d_i / \text{Summe } n_i = \text{Zahlenmittelwert}$$

$$d_w = \text{Summe } n_i \times d_i^2 / \text{Summe } n_i \times d_i = \text{Gewichtsmittelwert}$$

$n_i$ = Anzahl der Partikel mit Durchmesser $d_i$,
$d_i$ = ein bestimmter Durchmesser.
i = fortlaufender Parameter.

In diesem Zusammenhang bedeutet der Begriff Gewicht ein gewichtetes Mittel, wobei die größeren Durchmesser einen höheren Stellenwert erhalten.

Aufgrund ihrer glatten Oberfläche können mit den erfindungsgemäßen Mikropartikeln besondere Glättungseffekte erzielt werden, zudern eignen sie sich auch insbesondere für Trennverfahren, wie z.B, der Chromatographie.

Die Verwendung von gattungsgemäßen Mikropartikel für Trennverfahren ist ausführlich in der prioritätsälteren nicht-vorveröffentlichen deutschen Patentanmeldung Nr. 19816070.4 derselben Anmelderin beschrieben, auf die hier vollinhaltlich Bezug genommen wird.

Es versteht sich, daß die erfindungsgemäßen Partikel auch für alle weiteren Anwendungen wie sie in der deutschen Patentanmeldung Nr. 19737481.6 aufgeführt sind, geeignet sind.

So können sie in reiner Form oder als Wirkstoffträger auch im weitesten Sinne eingesetzt werden, beispielsweise

- als Additive in der Kosmetik für Salben, Puder, Cremes, Pasten
- als Träger von Wirksubstanzen in pharmazeutischen, tiermedizinischen und anderen ähnlichen Anwendungen,
- als Glättungsmittel z.B. zum Verschließen von Poren oder Glätten von Grate
- als Lebensmittelzusatzstoff, z.B. als Füllkomponente oder zum Verbessern von rheologischen Eigenschaften,
- als Additiv zur Veredlung von z.B. Emulsionspolymerisaten,
- als Trennhilfen, z.B. für die Abtrennung von Verunreinigungen,
- als Verkapselungsmaterial,
- als Träger für z.B. magnetische Partikel,
- als Füllmittel für insbesondere bioabbaubare Polymere oder technische Polymere z.B. zur Eigenschaftskontrolle,
- als Additiv zur Eigenschaftskontrolle, z.B. der Porosität, des Gewichts, der Farbe,
- als Partikelstandard zur Eichung oder Bestimmung der Partikelgröße von unbekannten Materialien,
- als Trägermaterial zur kontrollierten, z.B. retardierten Wirkstoffabgabe,
- als Füllstoff zur Eigenschaftsverbesserung von technischen oder biokompatiblen Polymeren,
- in diagnostischen Tests, z. B. als Ultraschallmittel

Aufgrund ihrer Naturidentität sind die meisten der erfindungsgemäß eingesetzten wasserunlöslichen linearen Polysaccharide und deren Abbauprodukte, insbesondere die Polyglucane wie Poly(1,4-alpha-D-glucan), biokompatibel und biologisch abbaubar. Sie besitzen eine hohe Gewebeverträglichkeit und reichern sich nicht in einem tierischen, insbesondere menschlichen, Organismus an.

Unter biologischem Abbau wird dabei jedweder in vivo ablaufende Vorgang verstanden, der zu einem Abbau oder einer Zerstörung der Substanzen, hier der Polysaccharide, führt.

Diese Eigenschaften der Blokompatibilität und der biologischen Abbaubarkeit sind insbesondere für Verwendungen vorteilhaft, die einen menschlichen oder tierischen Organismus betreffen, z. B. in der Medizin, Pharmazie oder Kosmetik.

Im folgenden wird die Erfindung anhand von Beispielen näher erläutert.

Beispiele 1 und 2

Jeweils 1,0 g Poly(1,4-alpha-D-glucan) wird in 5 ml Dimethylsulfoxid (DMSO, p.a. von Riedel-de-Haen) bei 60 °C gelöst. Eine den Konzentrationsangaben in Tabelle 1 entsprechende Menge Hydroxypropylmethylcellulose (HPMC, E5Prem. der Firma Dow Chemicals) wird in 100 ml Aqua bidest, gelöst.
Die das Polyglucan enthaltende DMSO-Lösung wird bei Raumtemperatur zu der 100 ml HPMC-Lösung unter Rühren innerhalb weniger Sekunden getropft.
Die erhaltene Mischung wird für 16 Stunden bei 5 °C gelagert. Es bildet sich ein feiner weißer Niederschlag aus Mikropartikeln in einer milchartigen Suspension aus. Die Partikel werden abgetrennt, indem der gesamte Ansatz homogen suspendiert und anschließend bei 3000 Umdrehungen pro Minute für 10 bis 15 Minuten zentrifugiert wird (Labofuge GL der Firma Heraeus). Der feste Rückstand wird insgesamt dreimal mit Aqua bidest, aufgeschlämmt und emeut zentrifugiert.

Der erhaltene Feststoff wird in ca. 5 bis 10 ml Aqua bidest. aufgeschlämmt, eingefroren und lyophilisiert (Gefriertrocknung Christ Delta 1-24 KD).

Die Ergebnisse sind in der folgenden Tabelle 1 aufgeführt.

Tabelle 1

|  | Konzentration HPMC (%) | Ausbeute (%) |
|---|---|---|
| Beispiel 1 | 1,0 | 49 |
| Beispiel 2 | 10,0 | 30 |

Beispiel 3

Charakterisierung der in den Beispielen 1 und 2 hergestellten Mikropartikel

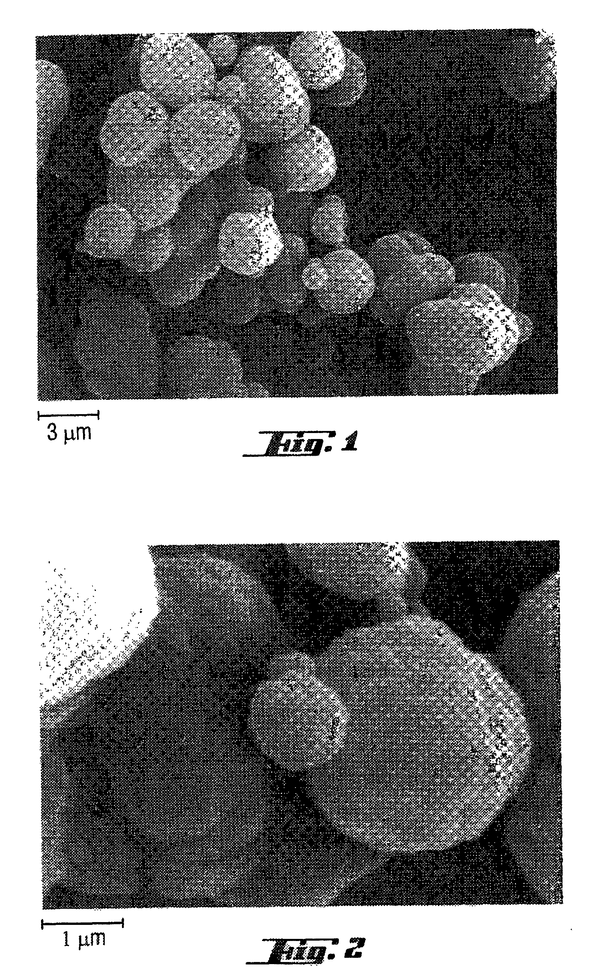

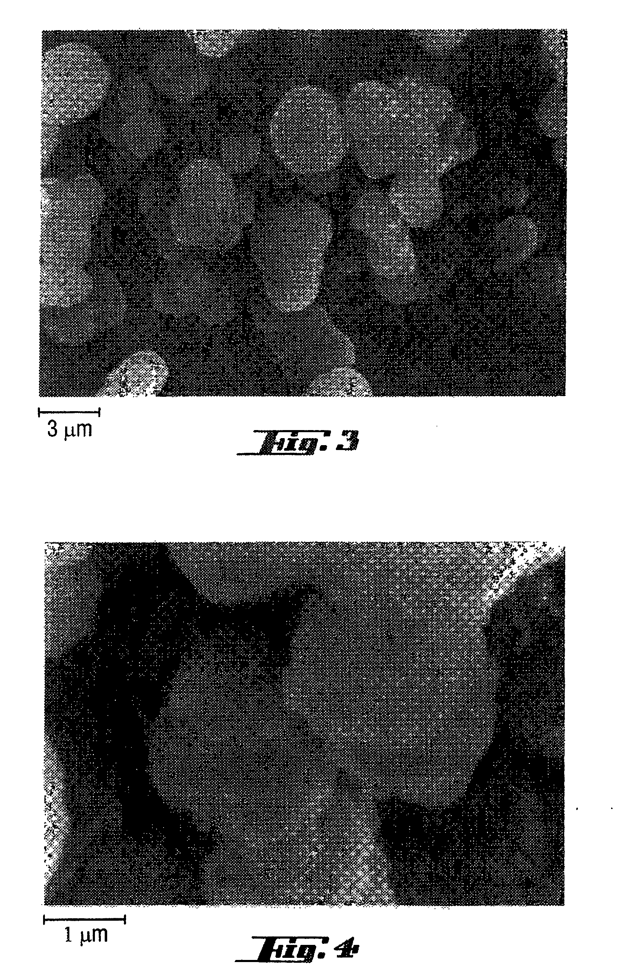

Die Charakterisierung der Partikel erfolgte anhand von Rasterelektronenmikroskopaufnahmen (REM, Camscan S-4), wie sie z. B. in Abbildungen 1 bis 2 gezeigt sind.

Die Ergebnisse sind in der folgenden Tabelle 2 aufgeführt.

Tabelle 2

|  | Beipiel 1 | Beispiel 2 |
|---|---|---|
| Größe | 1,0-3,0 μm | 1,0-3,0 μm |
| Form | kugelförmig | nahezu kugelförmig |
| Oberflächenbeschaffenheit | glatt | glatt |

Beispiele 4 und 5

Einfluß des Molekulargewichts des Cellulosederivats auf die Partikelbeschaffenheit

Die Versuche wurden im wesentlichen analog zu Beispielen 1 und 2 durchgeführt mit der Ausnahme, daß HPMC unterschiedlicher Molekulargewichte verwendet wurde, wobei E5Prem niedermolekularer Natur und damit niederviskoser als K15Prem (ebenfalls von Dow Chemical) ist.
Wie aus den Ergebnissen und den Abbildungen 3 bis 6 ersichtlich, sind die erhaltenen Partikel von gleicher Qualität. Das Molekulargewicht des eingesetzten Cellulosederivats hat folglich keinen wesentlichen Einfluß auf die Beschaffenheit der Partikel.

Die Ergebnisse sind in der folgenden Tabelle 3 zusammengefaßt.

Tabelle 3

|  | Beispiel 4 | Beispiel 5 |
|---|---|---|
| HPMC (%) | E5Prem | K15Prem |
| Konzentration | 1,0 | 1,0 |
| Ausbeute | 49 | 45 |
| Größe | 1,0-3,0 μm | 1,0-3,0 μm |
| Form | kugelförmig | kugelförmig |
| Oberflächenbeschaffenheit | nahezu glatt | nahezu glatt |

Beispiel 6

Bestimmung der Löslichkeit von Polysacchariden und Klassifizierung nach dem Deutschen Arzneibuch (DAB)

564 mg Poly(1,4-alpha-D-glucan) wurden in etwa 0,5 l Aqua bidest, bei 1,3 bar und 130 °C 1,5 Stunden in einem Autoklaven (Apparat Certoclav) erhitzt. Vorher war das Gewicht des Autoklaven bestimmt worden.
Anschließend wurde die Apparatur entspannt und bei Raumtemperatur abgekühlt.
Der Inhalt wurde gewogen. Er entsprach 501,74 g.
Nach weiteren 24 Stunden wurde zentrifugiert und dekantiert. Der erhaltene feste Rückstand wurde getrocknet und ausgewogen. Es wurden 468 mg erhalten, woraus sich ein gelöster Anteil von 96 mg errechnet,
Bezogen auf die eingesetzte Menge an Lösungsmittel folgt daraus, daß zur Lösung von 1 mg Poly(1,4-alpha-D-glucan)) 5226 mg Wasser erforderlich sind. Nach der Klassifizierung gemäß DAB fällt diese Substanz somit unter die Klasse "sehr schwer löslich". Gemäß DAB fallen unter diese Klasse alle Substanzen, für die zwischen 1.000 und 10.000 Teile Lösungsmittel erforderlich sind, um 1 Teil der Substanz in Lösung zu bringen.

Dies ist von den 7 Klassen, in die die Löslichkeit gemäß DAB eingeteilt wird, die Klasse 6, wobei die Einteilung von der Klasse 1 "sehr leicht löslich" bis Klasse 7 "praktisch unlöslich" reicht.

**EP 1 124 896 B1**

**Patentansprüche**

1. Verfahren zur Herstellung von sphärischen Mikropartikeln mit glatter Oberfläche, wobei glatte Oberfläche bedeutet, dass die Tiefe von Unregelmäßigkeiten auf der Partikeloberfläche maximal 10% des mittleren Partikeldurchmessers beträgt, die ganz oder teilweise aus mindestens einem wasserunlöslichen, unter die Klassen 5-7 nach der Definition des Deutschen Arzneibuches fallenden, linearen Polysaccharid bestehen, durch Lösen des mindestens einen wasserunlöslichen linearen Polysaccharids in einem Lösungsmittel oder Lösungsmittelgemisch, Einbringen der Lösung in ein Fällmittel oder Fällmittelgemisch, gegebenenfalls Kühlen des dabei entstehenden Gemisches und Abtrennen der gebildeten Mikropartikel, wobei als Fällungshilfsmittel mindestens ein wasserlösliches Cellulosederivat eingesetzt wird.

2. Verfahren nach Anspruch 1, wobei das Cellulosederivat ein Celluloseester oder ein Celluloseether ist.

3. Verfahren nach einem der Ansprüche 1 oder 2, wobei das wasserlösliche Cellulosederivat ausgewählt ist unter Hydroxypropylmethylcellulosen, Hydroxyethylcellulosen und Carboxymethylcellulosen, Cellulosepropionaten, Cellulosebutyraten, Celluloseacetaten, Celluloseacetobutyrate, Celluloseacetopropionate, Cellulosenitraten, Ethylcellulosen, Benzylcellulosen und Methylcellulosen.

4. Verfahren nach einem der Ansprüche 1 bis 3, wobei die Lösung und das Fällmittel bei einer Temperatur im Bereich von 20 bis 50 °C vermengt werden und das entstehende Gemisch auf eine Temperatur im Bereich von plus 10 °C bis minus 10 °C abgekühlt wird.

5. Verfahren nach Anspruch 4, wobei das entstehende Gemisch auf eine Temperatur im Bereich von plus 5 °C bis minus 5 °C abgekühlt wird.

6. Verfahren nach einem der Ansprüche 1 bis 5, wobei als Fällmittel Wasser oder ein wäßriges Medium eingesetzt wird.

7. Verfahren nach einem der vorhergehenden Ansprüche, wobei als Lösungsmittel Dimethylsulfoxid eingesetzt wird.

8. Verfahren nach einem der vorhergehenden Ansprüche, wobei das wasserunlösliche lineare Polysaccharid ein lineares Poly-D-glucan ist.

9. Verfahren nach Anspruch 8, wobei das Polyglucan Poly(1,4-alpha-D-glucan) ist.

10. Verfahren nach Anspruch 8, wobei das Polyglucan Poly(1,3-beta-D-glucan) ist.

11. Verfahren nach einem der vorhergehenden Ansprüche, wobei das wasserunlösliche lineare Polysaccharid ein chemisch modifiziertes Polysaccharid ist.

12. Verfahren nach Anspruch 11, wobei das Polysaccharid in mindestens einer der Positionen, die nicht an der Ausbildung der Polymerkette beteiligt sind, vorzugsweise in Position 2-, 3- und/oder 6, verestert und/oder verethert worden ist.

13. Verfahren nach einem der vorhergehenden Ansprüche, wobei zusätzlich zu dem wasserunlöslichen linearen Polysaccharid ein wasserunlösliches verzweigtes Polysaccharid in einer Menge von maximal 30 Gew.-% bezogen auf die Gesamtmenge an eingesetztern wasserunlöslichen Polysaccharid zugesetzt wird.

14. Verfahren nach Anspruch 13, wobei das wasserunlösliche verzweigte Polysaccharid ein Polyglucan ist.

15. Verfahren nach Anspruch 14, wobei das Polyglucan ein verzweigtes Poly(1,4-alpha-D-glucan ist.

16. Verwendung von sphärischen Mikropartikeln hergestellt nach einem der Ansprüche 1 bis 15 zur Trennung von Stoffgemischen.

17. Verwendung von sphärischen Mikropartikeln hergestellt nach einem der Ansprüche 1 bis 15 als Füllmittel in Polymeren.

18. Verwendung von sphärischen Mikropartikeln hergestellt nach einem der Ansprüche 1 bis 15 in diagnostischen Tests.

**Revendications**

1. Procédé de préparation de microparticules sphériques à surface lisse, dans lequel une surface lisse signifie que la profondeur d'irrégularités à la surface des particules s'élève au maximum à 10 % du diamètre moyen des particules, qui sont constituées totalement ou partiellement d'au moins un polysaccharide linéaire insoluble dans l'eau, précipitant dans les classes 5-7 selon la définition du codex allemand, par dissolution du au moins un polysaccharide linéaire insoluble dans l'eau dans un solvant ou un mélange de solvants, introduction de la solution dans un milieu de précipitation ou un mélange de milieux de précipitation, éventuellement refroidissement du mélange alors produit et séparation des microparticules formées, dans lequel on utilise comme adjuvant de précipitation au moins un dérivé de cellulose hydrosoluble.

2. Procédé selon la revendication 1, dans lequel le dérivé de cellulose est un ester de cellulose ou un éther de cellulose.

3. Procédé selon une des revendications 1 ou 2, dans lequel le dérivé de cellulose hydrosoluble est choisi parmi les hydroxypropylméthylcelluloses, les hydroxycelluloses et les carboxyméthylcelluloses, les propionates de cellulose, les butyrates de cellulose, les acétates de cellulose, les acétobutyrates de cellulose, les propionates de cellulose, les nitrates de cellulose, les éthylcelluloses, les benzylcelluloses et les méthylcelluloses.

4. Procédé selon une des revendications 1 à 3, dans lequel la solution et le milieu de précipitation sont mélangés à une température dans la gamme de 20 à 50°C et le mélange produit est refroidi à une température dans la gamme de plus 10°C jusqu'à moins 10°C.

5. Procédé selon la revendication 4, dans lequel le mélange produit est refroidi à une température dans la gamme de plus 5°C jusqu'à moins 5°C.

6. Procédé selon une des revendications 1 à 5, dans lequel on utilise comme milieu de précipitation l'eau ou un milieu aqueux.

7. Procédé selon une des revendications précédentes, dans lequel on utilise comme solvant le diméthylsulfoxyde.

8. Procédé selon une des revendications précédentes, dans lequel le polysaccharide linéaire insoluble dans l'eau est un poly-D-glucane linéaire.

9. Procédé selon la revendication 8, dans lequel le polyglucane est le poly(1,4-alpha-D-glucane).

10. Procédé selon la revendication 8, dans lequel le polyglucane est le poly(1,3-bêta-D-glucane).

11. Procédé selon une des revendications précédentes, dans lequel le polysaccharide linéaire insoluble dans l'eau est un polysaccharide modifié chimiquement.

12. Procédé selon la revendication 11, dans lequel le polysaccharide a été estérifié et/ou éthérifié à au moins une des positions, qui ne sont pas intéressées à la formation de la chaîne polymère, de préférence en position 1-, 3- et/ou 6.

13. Procédé selon une ou plusieurs des revendications précédentes, dans lequel on ajoute en supplément au polysaccharide linaire insoluble dans l'eau un polysaccharide ramifié insoluble dans l'eau en une quantité de 30 % en poids au maximum par rapport à la quantité totale de polysaccharide insoluble dans l'eau mis en oeuvre.

14. Procédé selon la revendication 13, dans lequel le polysaccharide ramifié insoluble dans l'eau est un polyglucane.

15. Procédé selon la revendication 14, dans lequel le polyglucane est un poly(1,4-alpha-D-glucane) ramifié.

16. Utilisation de microparticules sphériques préparées selon une des revendications 1 à 15 pour la séparation de mélanges de substances.

**EP 1 124 896 B1**

**17.** Utilisation de microparticules sphériques préparées selon une des revendications 1 à 15 comme charge dans des polymères.

**18.** Utilisation de microparticules sphériques préparées selon une des revendications 1 à 15 dans des tests diagnostiques.


**Claims**

**1.** Procedure for the manufacture of spherical micro-particles with a smooth surface, where smooth surface means that the depth of irregularities on the surface of the particles represents, at the greatest, 10% of the mean diameter of the particle, which in total or in part consist of at least one water-insoluble, linear polysaccharide falling within the Classes 5 - 7 of the definition given by the Deutsche Arzneibuch [German Pharmaceutical Register], the procedure involving the dissolving of the at least one water-insoluble, linear polysaccharide in a solvent or mixture of solvents, mixing the solution with a precipitating agent or a mixture of precipitating agents, accompanied if necessary by cooling of the resulting mixture and separation of the micro-particles produced, where at least one water-soluble cellulose derivative is employed as an auxiliary precipitating agent.

**2.** Procedure in accordance with claim 1, where the cellulose derivative is a cellulose ester or a cellulose ether.

**3.** Procedure in accordance with one of claims 1 or 2, where the selected water-soluble cellulose derivative is one of the following: hydroxypropylmethylcelluloses, hydroxyethylcelluloses and carboxymethylcelluloses, cellulose proprionates, cellulose butyrates, cellulose acetates, cellulose acetobutyrates, cellulose acetoproprionates, cellulose nitrates, ethylcelluloses, benzyl celluloses and methylcelluloses.

**4.** Procedure in accordance with one of claims 1 to 3, where the solution and the precipitating agent are mixed at a temperature within the range between 20 and 50 °C and the resulting mixture is cooled to a temperature within the range between plus 10 °C and minus 10 °C.

**5.** Procedure in accordance with claim 4 where the resulting mixture is cooled to a temperature within the range between plus 5°C and minus 5 °C.

**6.** Procedure in accordance with one of claims 1 to 5, where water or an aqueous medium is used as the precipitating agent.

**7.** Procedure in accordance with one of the foregoing claims, where dimethylsulphoxide is employed as the solvent.

**8.** Procedure in accordance with one of the foregoing claims, where the water-insoluble, linear polysaccharide is a linear polyglucane.

**9.** Procedure in accordance with claim 8, where the polyglucane is poly(1,4-alpha-D-glucane.

**10.** Procedure in accordance with claim 8, where the polyglucane is poly(1,3-beta-D-glucane).

**11.** Procedure in accordance with one of the foregoing claims, where the water-insoluble linear polysaccharide is a chemically modified polysaccharide.

**12.** Procedure in accordance with claim 11, where the polysaccharide has been esterified and/or etherified in at least one of the positions which is not associated with the structure of the polymer chain, preferably in position 2-, 3- and/or 6.

**13.** Procedure in accordance with one of the foregoing claims where in addition to the water-insoluble linear polysaccharide a water-insoluble, branched polysaccharide has been added in a proportion of not more than 30 % by weight relative to the total quantity of water-insoluble polysaccharide used.

**14.** Procedure in accordance with claim 13, where the water-insoluble, branched polysaccharide is a polyglucane.

**15.** Procedure in accordance with claim 14, where the polyglucane is a branched poly(1,4-alpha-glucane).

16. The use of spherical micro-particles manufactured in accordance with one of claims 1 to 15 for the separation of mixtures of materials.

17. The use of spherical, micro-particles manufactured in accordance with one of claims 1 to 15 as a filling material in polymers.

18. The use of spherical micro-particles manufactured in accordance with one of claims 1 to 15 in diagnostic tests.

3 µm

_Fig. 1_

1 µm

_Fig. 2_

3 µm

*Fig. 3*

1 µm

*Fig. 4*

3 μm

*Fig. 5*

1 μm

*Fig. 6*